Europäisches Patentamt

European Patent Office

Office européen des brevets

(11) Publication number: **0 335 659**
A2

(12) # EUROPEAN PATENT APPLICATION

(21) Application number: **89303051.0**

(22) Date of filing: **28.03.89**

(51) Int. Cl.⁴: **G 05 B 19/18**
G 05 B 19/405

(30) Priority: **28.03.88 JP 73646/88**

(43) Date of publication of application:
**04.10.89 Bulletin 89/40**

(84) Designated Contracting States: **DE ES FR GB IT**

(71) Applicant: **YAMAZAKI MAZAK KABUSHIKI KAISHA
1 Azanorifune Ooazaoguchi Ooguchi-cho
Niwa-gun Aichi-ken (JP)**

(72) Inventor: **Uemura, Kazuki
Waterlelielaan 5
B-3200 Keseel-Lo (BE)**

(74) Representative: **Sturt, Clifford Mark et al
MARKS & CLERK 57-60 Lincoln's Inn Fields
London WC2A 3LS (GB)**

(54) A setting control method of machining coordinate system in a machine tool.

(57) A machine tool having the first and second spindle stocks being relatively movable in Z axis direction in the shape of facing to each other and workpiece spindles provided rotatably through which a workpiece can be held by those spindle stocks.

Machining in the first spindle stock is performed on a basis of the machining coordinate system set relating to the first spindle stock according to the first offset value and machining in the second spindle stock is performed on a basis of the machining coordinate system relating to the second spindle stock set by computing on a basis of said first offset value or the second offset value.

EP 0 335 659 A2

# Description

## A SETTING CONTROL METHOD OF MACHINING COORDINATE SYSTEM IN A MACHINE TOOL

BACKGROUND OF THE INVENTION

The present invention relates to a setting control method of machining coordinate system in a machine tool suitable for application when machining is performed toward a workpiece in both spindle stocks in a machine tool having two spindle stocks on which workpiece spindles are mounted in the shape of facing to each other.

A machine tool capable of executing the first routine of machining and the second routine of machining in each workpiece spindle successively in such a manner that spindle stocks having workpiece spindles provided in the shape of facing to each other are relatively provided being free to move and drive in Z axis direction and a workpiece is delivered between workpiece spindles, performing machining toward a long sized workpiece without a center rest in such a manner that a long sized workpiece is rotated in the shape of holding between both workpiece spindles and performing machining successively while a bar shaped workpiece is pulled out one workpiece spindle with a predetermined length at a time was proposed recently.

However, how to set machining coordinate system when machining toward a workpiece is performed between workpiece spindles in case where two spindle stocks are provided in the shape of facing to each other is important for proper machining and development of such a control method is desired.

In consideration of the above-described circumstances, the object of this invention is to provide a setting control method of machining coordinate system in a machine tool capable of performing machining toward a workpiece in opposed spindle stocks smoothly.

SUMMARY OF THE INVENTION

This invention is comprised in such a manner that in a machine tool having the first and second spindle stocks being relatively movable in the first direction in the shape of facing to each other and workpiece spindles provided rotatably through which a workpiece can be held by those spindle stocks, machining program is composed on a basis of a workpiece origin corresponding to a workpiece, a standard origin which moves together with one spindle stock at least between two spindle stocks moving in said first direction is set, the distance between said standard origin and a workpiece origin is set as the first offset value, machining toward a workpiece in the first spindle stock is performed by setting the first machining coordinate system on a basis of said first offset value for said first spindle stock and machining in the second spindle stock is performed by setting the second machining coordinate system for the second spindle stock on a basis of said first offset value and movement quantity of a workpiece toward a mechanical origin.

And, the present invention is comprised in such a manner that machining program is composed on a basis of a workpiece origin corresponding to a workpiece, the first standard origin which moves together with the first spindle stock moving in the first direction is set at the first spindle stock, the second standard origin which moves together with the second spindle stock moving in said first direction is set at the second spindle stock, the distance between the workpiece origin of said workpiece installed in said first spindle stock and said first standard origin is set as the first offset value, the distance between the workpiece origin of said workpiece installed in said second spindle stock and said second standard origin is set as the second offset value, machining toward said workpiece installed in said first spindle stock is performed by setting the first machining coordinate system for said first spindle stock on a basis of said first offset value, the second machining coordinate system is set for the second spindle stock on a basis of said second offset value and machining in the second spindle stock on basis of machining program is performed on a basis of the set second machining coordinate system.

With the above-described constitution, machining in a machine tool which the first and second spindle stocks relatively move can be smoothly performed by setting machining coordinate system relating to each spindle stock toward a standard origin.

Furthermore, the present invention is comprised in such a manner that in a machine tool having the first and second spindle stocks being relatively movable in the first direction in the shape of facing to each other and workpiece spindles provided rotatably through which a workpiece can be held by those spindle stocks, machining program is composed on a basis of a workpiece origin corresponding to a workpiece, a standard origin which moves together with one spindle stock at least between two spindle stocks moving in the first direction is set, the distance between said standard origin and a workpiece origin is set as the first offset value, machining toward a workpiece installed in the first spindle stock is performed by setting the first machining coordinate system for said first spindle stock on a basis of said first offset value, said first and second spindle stocks are made close to each other by moving the first movement quantity and the second movement quantity to deliver a workpiece between both spindle stocks when machining in the first spindle stock finishes, the second offset value is obtained on a basis of said first offset value and said first and second movement quantity, the second machining coordinate system is set for the second spindle stock on a basis of the second offset value and machining in the second spindle stock on a basis of machining program is performed on a basis of the set second machining coordinate system.

Furthermore, the present invention is comprised in such a manner that in a machine tool having the first and second spindle stocks being relatively movable in the first direction in the shape of facing to each other and workpiece spindles provided rotatably through which a workpiece can be held by those spindle stocks, machining program is composed on a basis of workpiece origin corresponding to a workpiece, the first standard origin which moves together with the first spindle stock moving in said first direction is set at said first spindle stock, the second standard origin which moves together with the spindle stock moving in said first direction is set at said second spindle stock, the distance between a workpiece origin of said workpiece installed in said first spindle stock and said first standard origin is set as the first offset value, the distance between a workpiece origin of said workpiece installed in said second spindle stock and said second standard origin is set as the second offset value, machining toward said workpiece installed in said first spindle stock is performed by setting the first machining coordinate system for said first spindle stock on a basis of said first offset value, said first and second spindle stocks are made close to each other by moving relatively to deliver a workpiece between both spindle stocks when the machining in the first spindle stock finishes, the second machining coordinate system is set for the second spindle stock on a basis of said second offset value and machining in the second spindle stock on a basis of machining program is performed on a basis of the set coordinate system. With the above-described constitution, accurate machining can be performed in both spindle stocks in case where a workpiece is delivered during machining in the first and second spindle stocks.

And, the present invention is comprised in such a manner that machining program is composed on a basis of a workpiece origin corresponding to a workpiece, a standard origin which moves together with one spindle stock at least between two spindle stocks moving in the first direction is set, the distance between said standard origin and a workpiece origin is set as the first offset value, a workpiece to be machined is held between the first spindle stock and the second spindle stock by moving said first and second spindle stocks with the first and second movement quantity, the first machining coordinate system is set for said first spindle stock on a basis of said first offset value and the first movement quantity, the second machining coordinate system is set for said second spindle stock on a basis of said first offset value and the first and second movement quantity and machining on a basis of machining program is performed on a basis of the set first and second machining coordinate systems.

And, the present invention is comprised in such a manner that machining program is composed on a basis of a workpiece origin corresponding to a workpiece, the first standard origin which moves together with the first spindle stock moving in said first direction is set at said first spindle stock, the second standard origin which moves together with the second spindle stock moving in said first direction is set at said second spindle stock, the distance between a workpiece origin of said workpiece installed in said first spindle stock and first standard origin is set as the first offset value, the distance between a workpiece origin of said workpiece installed in said second spindle stock and said second standard origin is set as the second offset value, a workpiece to be machined is held between the first and second spindle stocks by moving said first and second spindle stocks with the first and second movement quantity, the first machining coordinate system is set for the first spindle stock on a basis of said first offset value and the first movement quantity, the second machining coordinate system is set for said second spindle stock on a basis of said second offset quantity and the second movement quantity and machining on a basis of the machining program is performed on a basis of the set first and second machining coordinate systems.

With the above-described constitution, proper machining movements can be executed in a case of machining by holding a shaft shaped workpiece between the first and second spindle stocks.

And, the present invention is comprised in such a manner that machining program is composed on a basis of a workpiece origin corresponding to a workpiece, a standard origin which moves together with one spindle stock at least between two spindle stocks moving in the first direction is set, the distance between said standard origin and a workpiece origin is set as the first offset value, machining toward a workpiece in the first spindle stock is performed by setting the first machining coordinate system for said first spindle stock on a basis of said first offset value in such a state that a workpiece is protruded with a quantity corresponding to the first offset value from the first spindle stock, when the machining finishes, said first and second spindle stocks are moved with the first and second movement quantity to hold the top edge of the workpiece held by the said first spindle stock by the second spindle stock, in this state, said first and second spindle stocks are moved with the third and fourth movement quantity L3, L4 to pull the workpiece out the first spindle stock with a predetermined quantity, the position of the workpiece origin toward the standard origin in this state is obtained as the third offset value and machining coordinate system is set for the first spindle stock at least on a basis of the third offset value, machining toward the pulled workpiece is performed on a basis of the set machining coordinate system.

With the above-described constitution, proper machining movements can be executed in case where machining is performed while a long and slender bar shaped workpiece is pulled out the first spindle stock.

BRIEF DESCRIPTION OF THE DRAWINGS

Fig.1 is a control block diagram for showing an example of a complex machining machine tool to which an embodiment of a setting control method of machining coordinate system according to the present invention is applied;

Figs.2 and 3 are flowcharts for showing an example of a machining delivery execution program;

Figs.4 and 5 are views for showing an example of a machining method of a chuck workpiece;

Fig.6 is a view for showing an example of a machining method of a shaft shaped workpiece;

Figs.7 through 9 are views for showing an example of a machining method of a bar shaped workpiece;

Figs.10 and 11 are views for showing another example of a machining method of a chuck workpiece; and

Fig.12 is a view for showing another example of a machining method of a bar shaped workpiece.

DESCRIPTION OF THE PREFERRED EMBODIMENTS

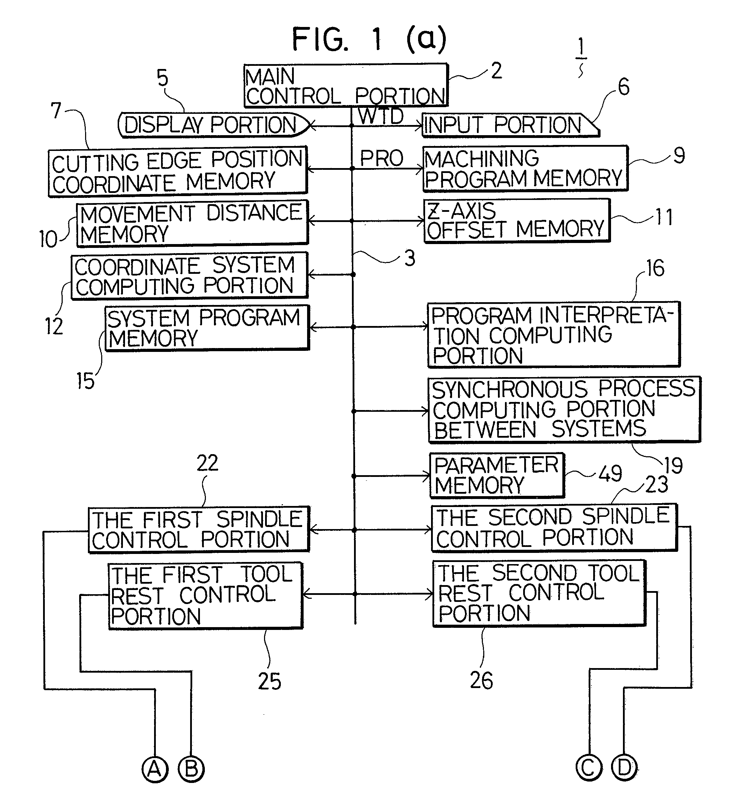

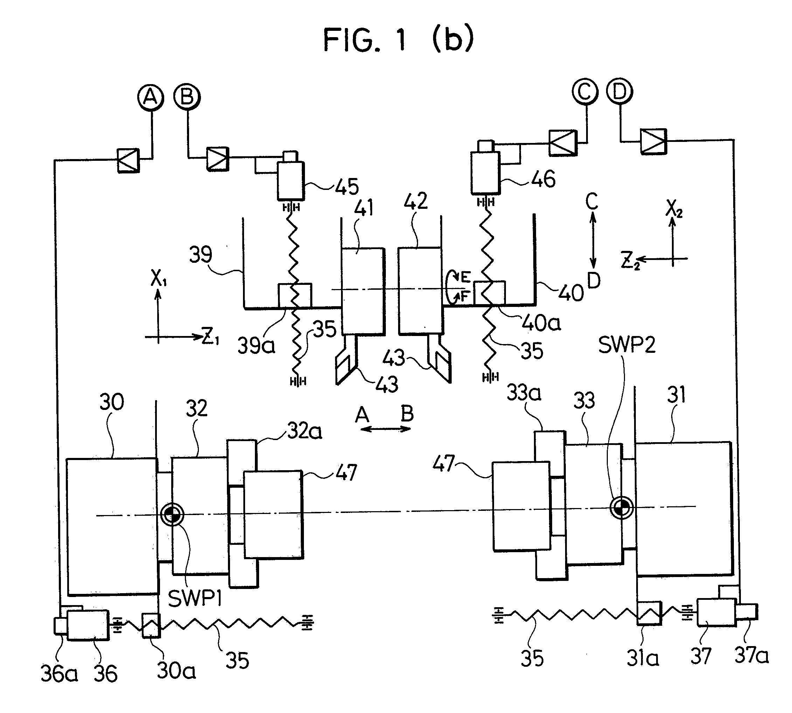

A complex machining machine tool 1 as a machine tool has a main control portion 2 as shown in Fig.1. A display portion 5 such as a display, an input portion 6 such as a keyboard, a cutting edge position coordinate memory 7, a machining program memory 9, a movement distance memory 10, a Z-axis offset memory 11, a coordinate system computing portion 12, a system program memory 15, a program interpretation computing portion 16, a synchronous process computing portion between systems 19, a parameter memory 49, a first spindle control portion 22, a second spindle control portion 23, a first tool rest control portion 25, a second tool rest control portion 26 and the like are connected with the main control portion 2 through a bus line 3.

And, two spindle stocks 30 and 31 are relatively provided with the complex machining machine tool 1 being free to move and drive in Z-axis direction, that is, in the directions as shown by the arrows A and B in Fig.1. Workpiece spindles 32, 33 are rotatably and drivably provided with the spindle stocks 30, 31 respectively. Chucks 32a, 33a are provided with the workpiece spindles 32, 33. Moreover, ball screws 35, 35 fit in the spindle stocks 30, 31 through nuts 30a and 31a. Spindle stock driving motors 36, 37 connect with the ball screws 35, 35 so that the ball screws 35, 35 can rotate and drive. Transducers 36a, 37a are provided with the spindle stock driving motors 36, 37. The first spindle control portion 22 and second spindle control portion 23 connect with the spindle stock driving motors 36, 37 and the transducers 36a, 37a respectively.

Tool rests 39 and 40 are movably and drivably provided in the directions as shown by the arrows C and D perpendicular to the directions as shown by the arrows A and B, that is, in X-axis direction in the shape of corresponding to the spindle stocks 30, 31 on the upper portion of the spindle stocks 30, 31 in Fig.1. Turrets 41, 42 are rotatably and indexably mounted on the tool rests 39, 40 in the shape of disposing back to back to each other in the directions as shown by the arrows E and F. And, plural tools 43 are indexably provided with the turrets 41, 42 at a predetermined machining position. The ball screws 35, 35 installed in the tool rest driving motors 45, 46 fit in the tool rests 39, 40 through the nuts 39a, 40a. The tool rests 39, 40 are moved and driven in the directions as shown by the arrows C and D by driving the tool rest driving motors 45, 46 forward and reversely.

With the above-described constitution of the complex machining machine tool 1, in case where machining is performed toward a workpiece 47 by using the complex machining machine tool 1, the workpiece 47 is installed in the workpiece spindle 32 of the spindle stock 30 side through the chuck 32a. In this state, the first routine of machining is performed on a basis of a machining program PRO relating to the workpiece 47 which is stored in the machining program memory 9. This machining is performed by means of the tool 43 indexed at a predetermined machining position on the turret 41 of the tool rest 39 in such a manner that the first spindle control portion 22 properly makes the spindle stock driving motor 36 drive to move the spindle stock 30 through the ball screw 35 in the directions as shown by the arrows A and B, that is, in $Z_1$-axis direction (The coordinate system on which the spindle stock 30 and the tool rest 39 are moved and driven is referred as $Z_1$-$X_1$ coordinate system.) and the first tool rest control portion 25 properly makes the tool rest driving motor 45 drive to move the tool rest 39 through the ball screw 35 in the directions as shown by the arrows C and D, that is, in $X_1$-axis direction.

In this way, after the predetermined first routine of machining is performed toward the workpiece 47 held by the workpiece spindle 32, the tool rest 39 is retracted in the direction as shown by the arrow C. Thereafter, the spindle stocks 30, 31 are moved in the directions as shown by the arrows A and B by driving the spindle stock driving motors 36, 37 through the first spindle control portion 22 and the second spindle control portion 23. Then, both spindle stocks close with each other. And, the right edge portion of the workpiece 47 in Fig.1 held by the workpiece spindle 32 through the chuck 32a is fitted and engaged with the chuck 33a of the approaching workpiece spindle 33 in an open state and the workpiece 47 is held by the chucks 32a, 33a. Then, the chuck 32a of the workpiece spindle 32 side is made open to hold the workpiece 47 by the chuck 33a of the workpiece spindle 33 side. And, the workpiece 47 is departed from the spindle stock 30 by moving and driving the spindle stock 31 in the direction as shown by the arrow B. In this way, after the workpiece 47 to which the first routine finishes is delivered to the workpiece spindle 33 side, the second routine of machining on a basis of the machining program PRO is executed toward the workpiece 47.

This machining is performed by means of the tool 43 indexed at a predetermined machining position on the turret 42 of the tool rest 40 in such a manner that the second spindle control portion 23 properly makes the spindle stock driving motor 37 drive to move the spindle stock 31 through the ball screw 35 in the directions as shown by the arrows A and B, that is, in $Z_2$-axis direction (The coordinate system on which the spindle stock 31 and the tool rest 40 are moved and driven is referred as $Z_2$-$X_2$ coordinate

system.) and the second tool rest control portion 26 properly makes the tool rest driving motor 46 drive to move the tool rest 40 through the ball screw 35 in the directions as shown by the arrows C and D, that is, in $X_2$-axis direction. On this occasion, the workpiece spindle 32 of the spindle stock 30 is supplied with the raw workpiece 47 and the first routine of machining is performed toward the raw workpiece 47 on a basis of the machining program PRO.

In this way, after the second routine of machining finishes toward the workpiece 47 installed in the spindle stock 31 side, the workpiece 47 to which the second routine of machining finishes is detached from the spindle stock 31. And, the workpiece 47 of the spindle stock 30 side to which the first routine finishes is delivered to the spindle stock 31 side and the second routine of machining is performed toward the delivered workpiece 47 to which the first routine finishes in a similar way to the above-described case. In this way, the first routine and the second routine of machining is performed on a basis of the machining program PRO while the workpiece 47 is delivered between the workpiece spindles 32 and 33 one after another. Machining movements including the delivery of the workpiece 47 between the workpiece spindles 32 and 33 are controlled on a basis of the machining delivery execution program WTP stored in the system program memory 15.

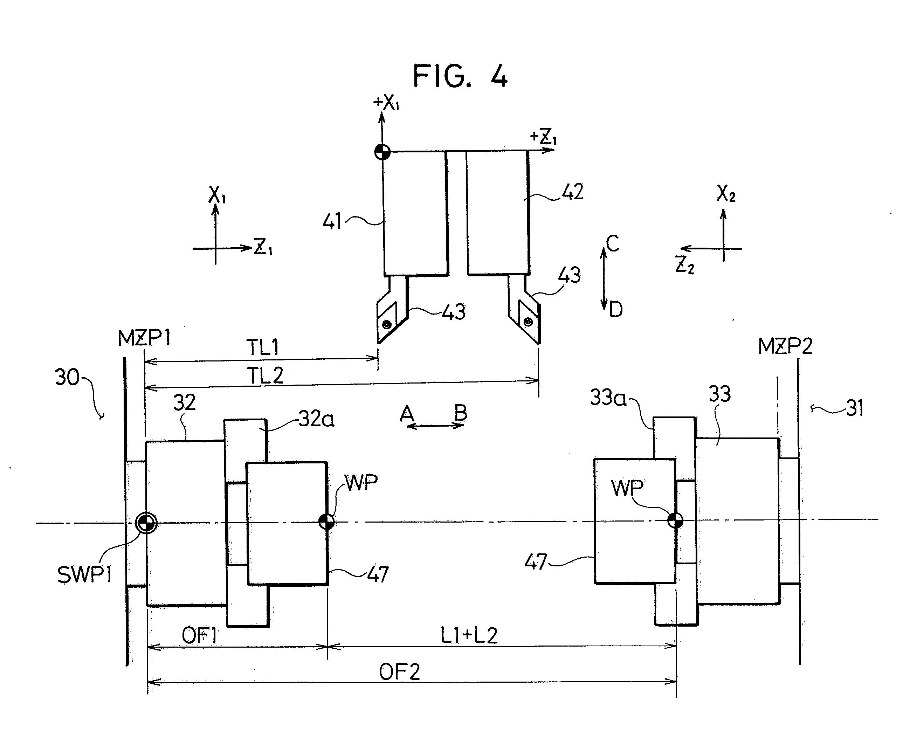

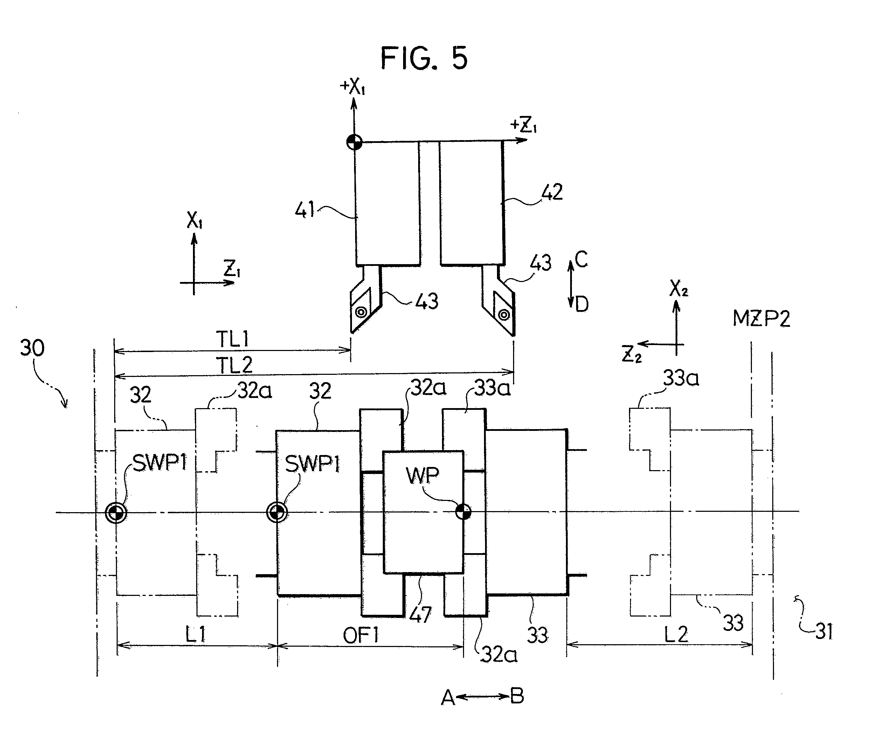

An operator inputs deta necessary for delivery through the input portion 6 as the delivery data WTD prior to the machining toward the chuck workpiece 47. The first Z-offset value OF1 in Z axis direction between the standard workpiece origin SWP1 of the spindle stock 30 and the workpiece origin WP which is a composition origin of the machining program PRO for the workpiece 47 installed in the workpiece spindle 32 of the spindle stock 30 when the spindle stock 30 is positioned at the mechanical origin MZP1 on $Z_1$-axis, the distance to be moved for the spindle stock 30 from the mechanical origin MZP1 on $Z_1$-axis in positive direction, that is, in the direction as shown by the arrow B in Fig.5 when the workpiece is delivered or the first movement distance L1 and the distance to be moved for the spindle stock 31 from the mechanical origin MZP2 on $Z_2$-axis in positive direction, that is, in the direction as shown by the arrow A in Fig.5 when the workpiece is delivered or the second movement distance L2 are adopted and inputted as the delivery data WTD as shown in Fig.4. The distance between the tool 43 installed in the turrets 41, 42 and the standard workpiece origin SWP1, that is, the mechani cal origin MZP1 (in case of the mesurement in such a state that the workpiece origin SWP1 is corresponded with the mechanical origin MZP1) is stored as the first tool set value TL1 and the second tool set value TL2 in the cutting edge position coordinate memory 7, respectively.

In this way, when the delivery data WTD is inputted from the input portion 6, the first Z-offset value OF1 in the inputted delivery data WTD is stored in the Z-axis offset memory 11 and the first movement distance L1 and the second movement distance L2 in the inputted delivery data WTD are stored in the movement distance memory 10. When the delivery data WTD is stored in each memory, the main control portion 2 makes the delivery execution program WTP drive to perform machining toward the workpiece 47 on a basis of the above-described machining program PRO and control delivery movement of the workpiece 47 between the workpiece spindles 32 and 33.

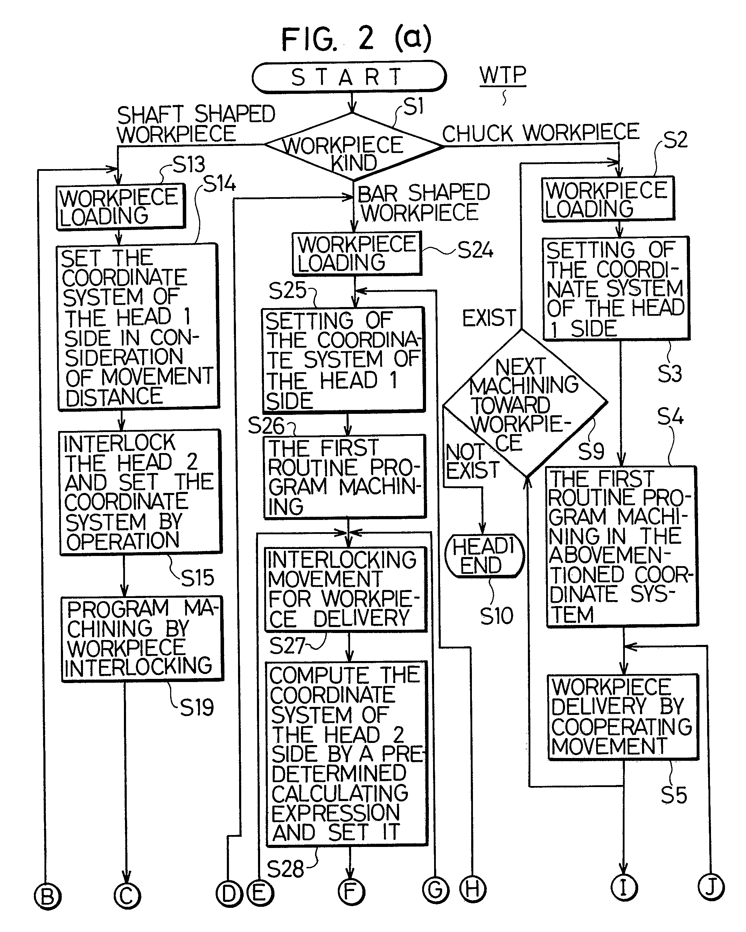

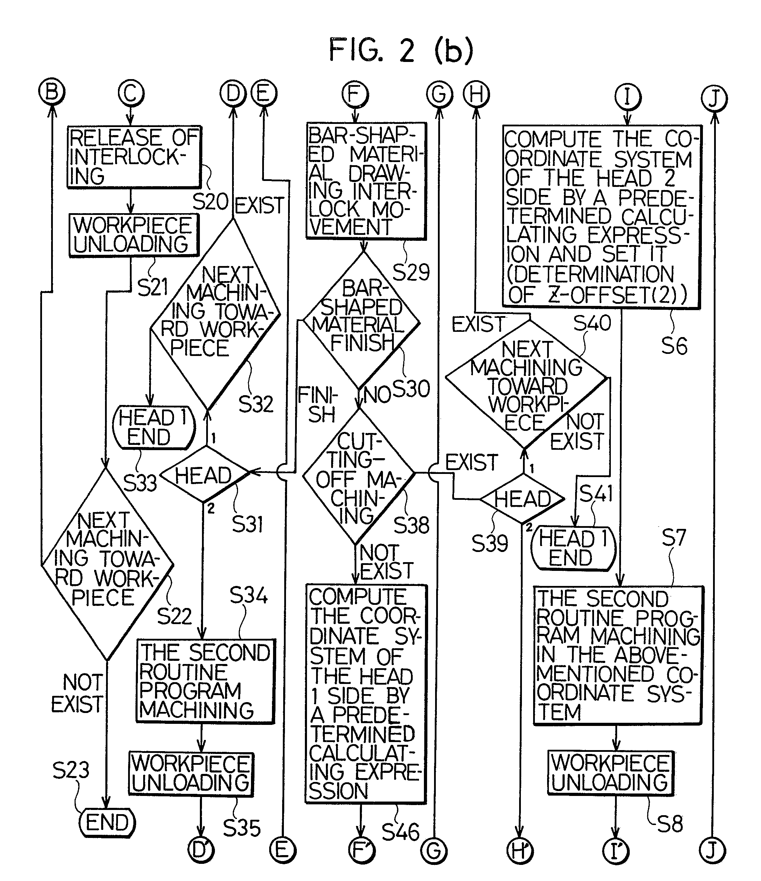

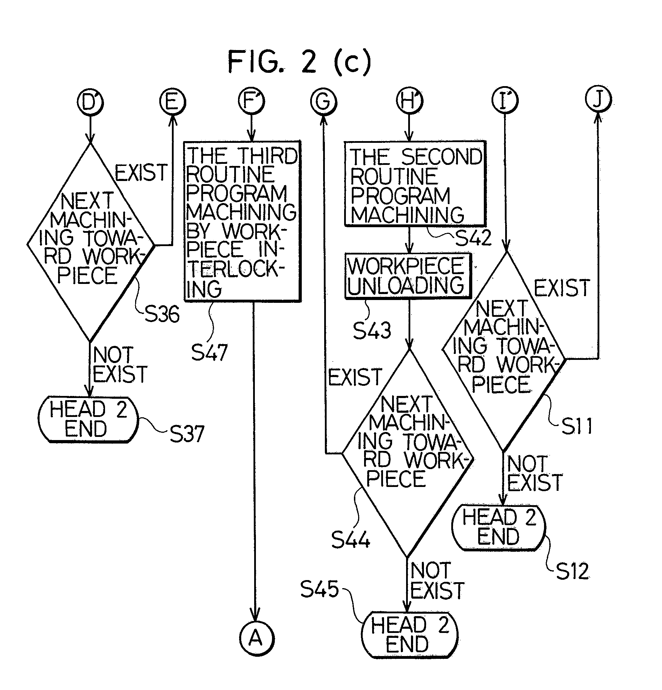

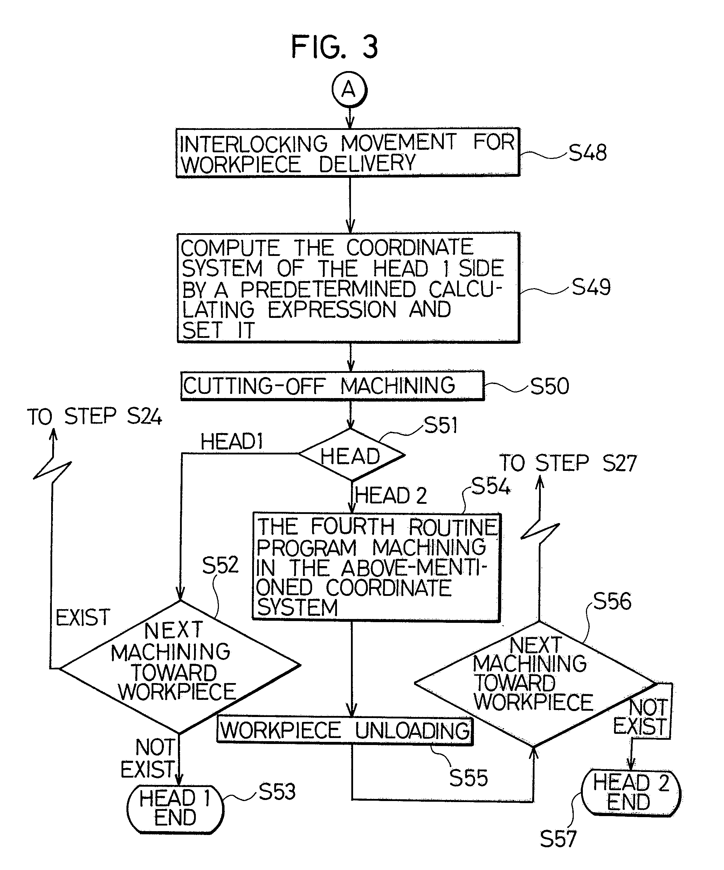

That is to say, at the step S1 as shown in Fig.2, the delivery execution program WTP judges whether the workpiece 47 to be machined from now on is a chuck workpiece of which the length in Z axis direction is relatively short in comparison with its diameter, a shaft shaped workpiece of which the length in Z axis direction is relatively long in comparison with its diameter or a bar shaped workpiece to which machining is performed while the bar-shaped slender workpiece is pulled out the workpiece spindle 32 with the predetermined length each time. This judgement is performed on a basis of the material form of the workpiece 47 provided in the program and the commands in the machining program PRO in such a manner that the program interpretation computing portion 16 interprets the machining program PRO to be executed from now on. In case where it is judged that the workpiece 47 is a chuck workpiece at the step S1, the program proceeds to the step S2, the loading of the workpiece 47 to the workpiece spindle 32 is permitted on a basis of the machining program PRO and the first Z-offset value OF1 of the delivery data WTD is read out from the Z-axis offset memory 11 at the step S3 to set the machining coordinate system for the spindle stock 30 (indicated as "Head 1" in Figs.2 and 3) in $X_1$-$Z_1$ direction on a basis of the standard workpiece origin SWP1.

In this way, after the machining coordinate system is set for the spindle stock 30 on a basis of the standard workpiece origin SWP1, the program proceeds to the step S4. The first routine of machining is performed by the machining program PRO on a basis of the set machining coordinate system in such a manner that the tool rest 39, that is, the turret 41 is moved in the directions as shown by the arrows C and D while the spindle stock 30 is moved in the directions as shown by the arrows A and B in Fig.4. On this occasion, the machining program PRO for performing on the spindle stock 30 side is composed on a basis of the workpiece origin WP. And, the distance between the workpiece origin WP and the standard workpiece origin SWP1 is defined as the first Z-offset value OF1, the distance between the standard workpiece origin SWP1 and the mechanical origin MZP1 is always retrieved by the first spindle control portion 22 through the transducer 36 and the like and the distance between the tool 43 on the tool rest 39 and the mechanical origin MZP1 is defined as the first tool set value TL1. So, the machining on the spindle stock 30 side on a basis of the machining program PRO can be easily executed by judging the coordinate position relation. (Such a method as coordinate relevance data belonging to a specific coordinate system such as the machihing program PRO is converted into other coordinate system on a basis of the position relation between coordinate systems to be executed has been proposed in European Patent Application as publication NO.0289333A2 by applicants. Therefore, the detailed explanation is omitted in this specification.)

In this way, when the first routine of machining finishes toward the workpiece 47, the program proceeds to the step S5. And, the main control portion 2 performs delivery of the workpiece 47 after the first routine from the spindle stock 30 to the spindle stock 31 between the spindle stocks 30 and 31. This delivery is performed in such a manner that the first spindle control portion 22 makes the spindle stock 30 move in the direction as shown by the arrow B with the first movement distance L1 and the second spindle control portion 23 makes the spindle stock 31 move in the direction as shown by the arrow A with the second movement distance L2. When the spindle stocks 30, 31 are moved with the distance L1, L2 respectively, the right edge portion in Fig.4 of the workpiece 47 held by the workpiece spindle 32 of the spindle stock 30 is fitted in the workpiece spindle 33 side of the spindle stock 31 as shown in Fig.5 and the right edge portion is held by the chuck 33a of the workpiece spindle 33 side.

In this way, when the workpiece 47 is held by the chuck 33a, holding of the workpiece 47 on the workpiece spindle 32 side is released. The spindle stock 30 is retracted in the direction as shown by the arrow A and the spindle stock 31 is moved in the direction as shown by the arrow B to finish the delivery movements.

Thereafter, the program proceeds to the step S6 for the main control portion 2 so that the machining toward the workpiece 47 delivered to the spindle stock 31 side can be performed on the tool rest 40 side, that is, on the turret 42 side. Then, the main control portion 2 obtains the second Z-offset value OF2 for setting the position of the workpiece origin WP toward the tool on the tool rest 40 side on a basis of the standard position at which the second tool set value TL2 is set, that is to say, the mechanical origin MZP1. The second Z-offset value OF2 is obtained by the following expression (1).

OF2 = L1 + L2 + OF1    (1)

In this way, after the second Z-offset value OF2 is obtained, a new machining coordinate system is set in $X_2$-$Z_2$ direction at the position which is a predetermined second offset value $OF_2$ away from the mechanical origin MZP1 as shown in Fig.4 in the right direction in the figure, that is, on the spindle stock 31 (shown as "Head 2" in Figs.2 and 3) side. The second routine of machining on a basis of the machining program PRO is performed toward the workpiece 47 on the workpiece spindle 33 side or the workpiece 47 after the first routine at the step S7.

In this case, the position of the origin position of the machining coordinate system set newly (the position of the workpiece origin WP when the spindle stock 31 is positioned at the mechanical origin MZP2 on the spindle stock 31 side) toward the mechanical origin MZP1 is defined as the second Z-offset value OF2. And, the position relation between the tool 43 and the mechanical origin MZP1 is defined as the second tool set value TL2. Moreover, the positions of the tool 43 of the turret 42 and the spindle stock 31 toward the mechanical origin MZP2 (the mechanical origin MZP1 since the distance between the mechanical origin MZP1 and MZP2 is fixed) are always detected by the second spindle control portion 23, the second tool rest control portion 26, the transducer 37a and the like. Accordingly, the machining on the spindle stock 31 side on a basis of the machining program PRO can be easily executed by computing on a basis of those relation.

In this way, when the second routine of machining finishes toward the workpiece 47 on the workpiece spindle 33 side, the program proceeds to the step S8. Then, the workpiece 47 after the second routine is detached from the workpiece spindle 33.

On the other hand, after the workpiece 47 is delivered between the workpiece spindles 32, 33 at the step S5, the program proceeds to the step S9 on the spindle stock 30 side and it is judged that whether there is the workpiece 47 to be machined in the spindle stock 30 or not. In case where there isn't the workpiece 47 to be machined, the program proceeds to the step S10 and machining operation in the spindle stock 30 is finished. In case where there is the workpiece 47 to be machined in the spindle stock 30, the program returns to the step S2 from the step S9. Then, the spindle stock 30 is supplied with a new workpiece 47 and the first routine of machining is executed toward the workpiece 47 of the spindle stock 30 while the second routine of machining is performed on the spindle stock 31 side.

And, when the workpiece 47 after the second routine is detached from the spindle stock 31 at the step S8, the main control portion 2 judges whether there is the second routine of machining toward the workpiece 47 on the spindle stock 31 side or not after the program proceeds to the step S11. In case where judgement is that the second routine of machining to be performed in the spindle stock 31 doesn't exist since the workpiece 47 isn't installed in the workpiece spindle 32 of the spindle stock 30, the program proceeds to the step S12 and the machining by the spindle stock 31 finishes. And, in the case where the second routine of machining to be performed in the spindle stock 31 exists since the workpiece 47 is installed in the spindle stock 30, the program returns to the step S5 and the workpiece 47 after the first routine by the spindle stock 30 is delivered to the spindle stock 31 side. The second routine of machining is performed toward the workpiece by the similar step from now on.

In the above-described embodiments, such a case is mentioned that an only standard workpiece origin SWP1 is provided on the spindle stock 30 side for tool setting of each tool 43 of the tool rests 39 and 40. It is possible to set one or more than one standard workpiece origin SWP1 optionally if it is necessary on control.

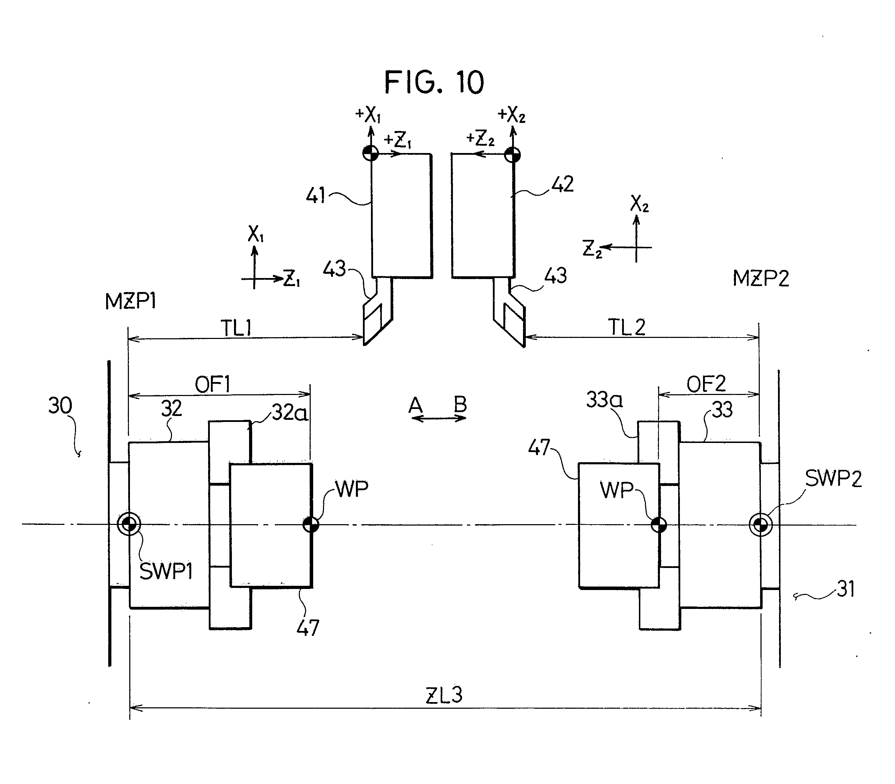

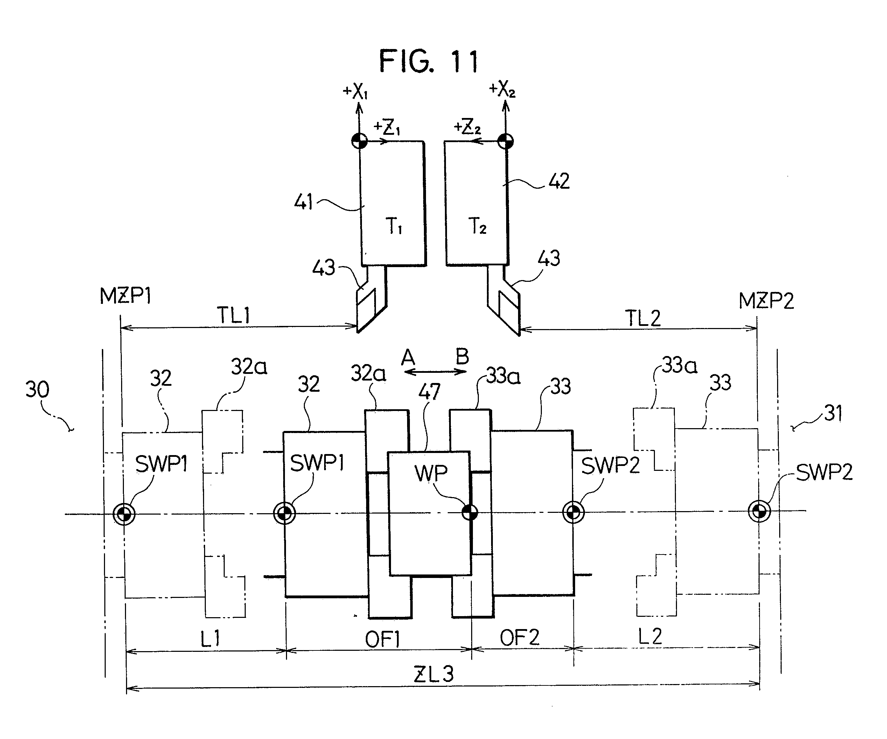

Such an example will be described hereinafter that the standard workpiece origin SWP1, SWP2 is respectively provided on the spindle stocks 30, 31 in Figs.10 and 11. It is thinkable that the example as shown in Fig.4 is a specific case where the distance ZL3 between the standard workpiece origin SWP1 and SWP2 is zero when two standard workpiece origin is provided as shown in Fig.10.

In cases as shown in Figs.10 and 11, the first Z-offset value OF1, the first movement distance L1 and the second movement distance L2 are necessary as the delivery data WTD. Besides, it is necessary to store the distance ZL3 between the standard workpiece origin SWP1 and SWP2 when the spindle stocks 30 and 31 are positioned at the respective mechanical origin MZP as a parameter in the parameter memory 49. In this case, the machining delivery execution program WTP as shown in Fig.2 can be applied as it is. And, the machining coordinate system in order to perform machining toward the workpiece 47 is set for the spindle stock 30 in $Z_1$-$X_1$ direction on a basis of the standard workpiece origin SWP1 at the step S3. Moreover, in the delivery of the workpiece 47 after the first routine, the spindle stock 30 is moved with the first movement distance L1 on a basis of the mechanical origin MZP1 in the direction as shown by the arrow B on $Z_1$-axis and the spindle stock 31 is moved with the second movement distance L2 in the direction as shown by the arrow A on $Z_2$-axis. Then, the right edge portion in the figure of the workpiece 47 of the spindle stock 30 is fitted and held by the chuck 33a of the workpiece spindle 33 of the spindle stock 31 as shown in Fig.11 and the delivery of the workpiece 47 between the spindle stocks 30 and 31 finishes.

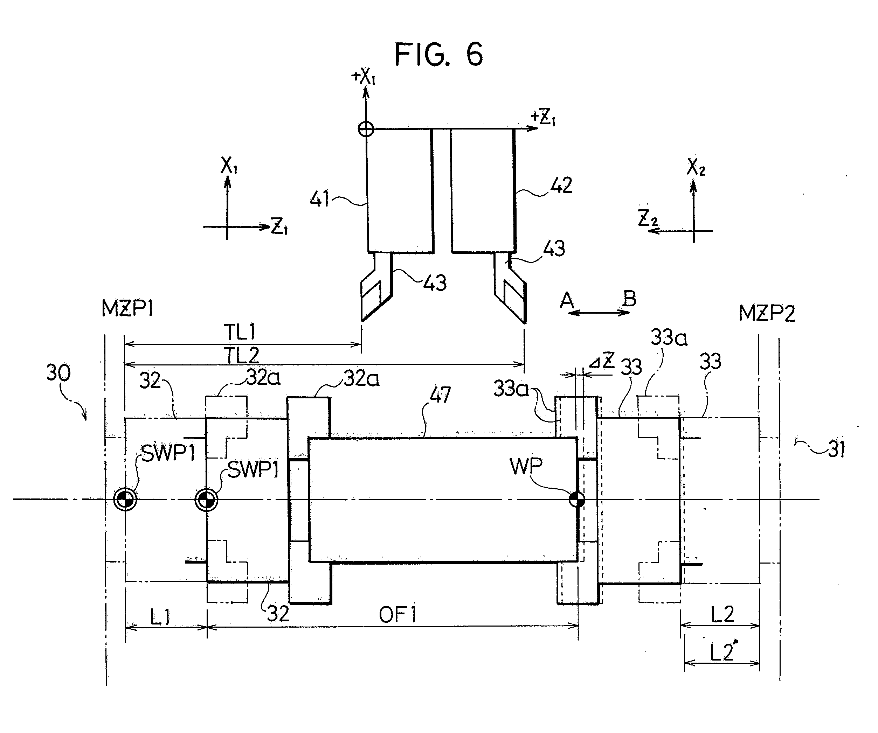

Thereafter, in case where a workpiece 47 is a long and slender shaft shaped workpiece and machining is performed by means of the tools 43, 43 installed in the turrets 41, 42 of the tool rests 39, 40 in such a manner that the workpiece spindles 32 and 33 are synchronously rotated through the synchronous process computing portion between systems 19 while the workpiece 47 is held between them as shown in Fig.6 and the spindle stocks 30 and 31 are synchronously moved and driven in the directions as shown by the arrows A and B, the distance between the standard workpiece origin SWP1 of the spindle stock 30 and the workpiece origin WP or the first Z-offset value OF1, the movement distance in $Z_1$-axis direction when the workpiece 47 is delivered from the mechanical origin MZP1 to the spindle stock 31 side or the first movement distance L1 and the movement distance of the spindle stock 31 from the mechanical origin MZP2 in $Z_2$-axis direction when the workpiece 47 is delivered to the spindle stock 31 side or the second movement distance L2 are necessary as the delivery data WTD as shown in Fig.6. The machining delivery execution program WTP proceeds to the step S13 from the step S1 in Fig.2 and the workpiece 47 is supplied between the workpiece spindles 32 and 33 by means of a proper handling means (not shown). Thereafter, the program proceeds to the step S14. The spindle stock 30 is moved with the first movement distance L1 in the direction as shown by the arrow B to hold the left edge portion in the figure of the workpiece 47 by the workpiece spindle 32 and the machining coordinate system on a basis of the standard workpiece origin SWP1 is set in $Z_1$-axis direction. On this occasion, the first Z-offset value OF1 is set on a basis of the standard workpiece origin SWP1 and the workpiece origin WP is set toward the standard workpiece origin SWP1. Thereafter, the program proceeds to the step S15. The spindle stock 31 is moved with the second movement distance L2 in the direction as shown by the arrow A, that is, in $Z_2$-axis direction to hold the right edge portion in the figure of the workpiece 47 by the workpiece spindle 33. On this occasion, the second offset value OF2 is obtained by the expression

$$OF2 = OF1 + L1 + L2 + \Delta z \quad (2)$$

through the coordinate system computing portion 12 in order to confirm the position of the workpiece origin WP on $Z_2$ coordinates. $\Delta z$ is dispersion in length of the workpiece 47 in Z axis direction. The dispersion can be obtained as the difference between the second movement distance L2 which is inputted as the delivery data WTD in advance and the true movement distance $L2'$ of the chuck 33a in $Z_2$-axis direction until the workpiece 47 is held when the spindle stock 31 is moved in the direction as shown by the arrow A to hold the workpiece 47. In this way, the machining coordinate system is newly set in $Z_2$-axis direction on the spindle stock 31 side on a basis of the second offset value OF2. Machining on a basis of the machining program PRO is performed toward the workpiece 47 at the step S19 by means of the machining coordinate system set newly on the spindle stock 31 side and the machining coordinate system set on the spindle stock 30 side on a basis of the standard workpiece origin SWP1. The distance between the newly set machining coordinate system and the workpiece origin WP becomes $L2 + \Delta z$, for instance by setting this machining coordinate system and the value becomes fixed. Accordingly, the machining on the spindle stock 30 side on a basis of the coordinate system can be easily performed.

When the machining toward the workpiece 47 finishes, the program proceeds to the step S20. The synchronous driving situation between the spindle stocks 30 and 31 and between the workpiece spindles 32 and 33 by the synchronous process computing portion between systems 19 is released and the machined workpiece 47 is detached from the workpiece spindles 32, 33 at the step S21. Then, the machining toward the workpiece 47 is finished. When the machining toward the workpiece 47 finishes, the program proceeds to the step S22 and it is judged that whether there is the workpiece 47 to be machined next or not. In case where there is the workpiece 47 to be machined next, the program proceeds to the step S13 and machining toward the workpiece 47 is continued again. In case where there isn't the workpiece 47 to be machined next, the program proceeds to the step S23, execution of the machining delivery execution program WTP is finished and the machining toward the workpiece 47 in the complex machining machine tool 1 ends.

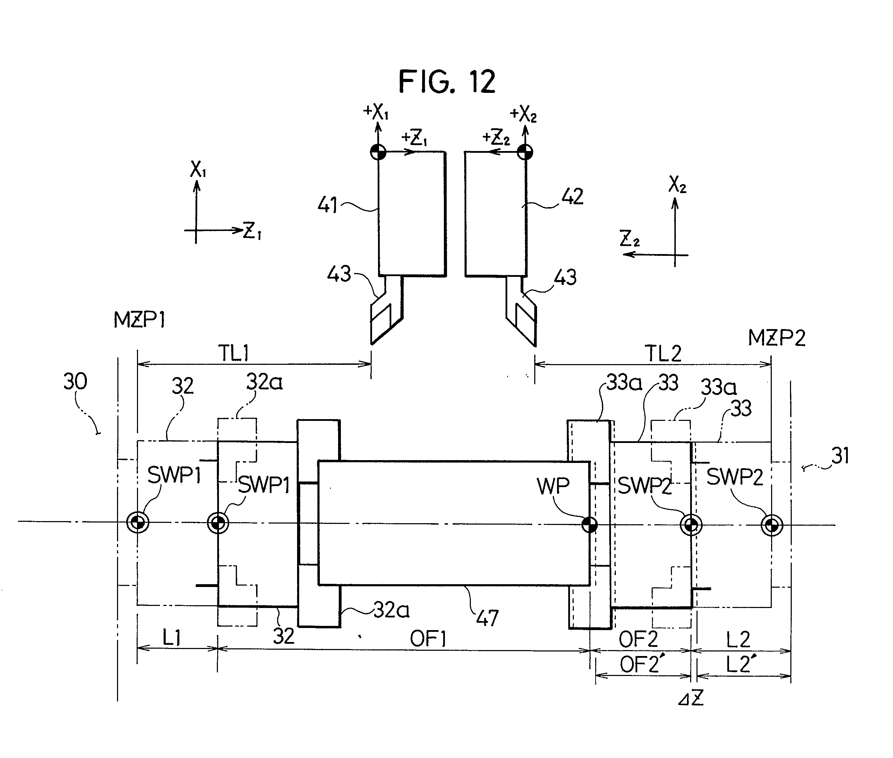

In case where two standard workpiece origin SWP1, SWP2 is provided on both sides of the spindle stocks 30, 31 as shown in Fig.12, the steps 13 through 23 in the machining delivery execution program WTP are available. On this occasion, data to be inputted as the delivery data WTD is the same as the case of Fig.6. However, as shown in Fig.12, the value of the second offset value OF2 is obtained by the expression

$$OF2 = ZL3 - L1 - L2 - OF_1 - \Delta z \quad (3)$$

on the assumption that the distance between the mechanical origin MZP1, MZP2 of the spindle stocks 30, 31 stored in the parameter memory 49 as a parameter is ZL3. And, machining coordinate system in $Z_2$-axis direction is set basing on the standard workpiece origin SWP2 on a basis of the second offset value OF2 and the machining toward the workpiece 47 is performed.

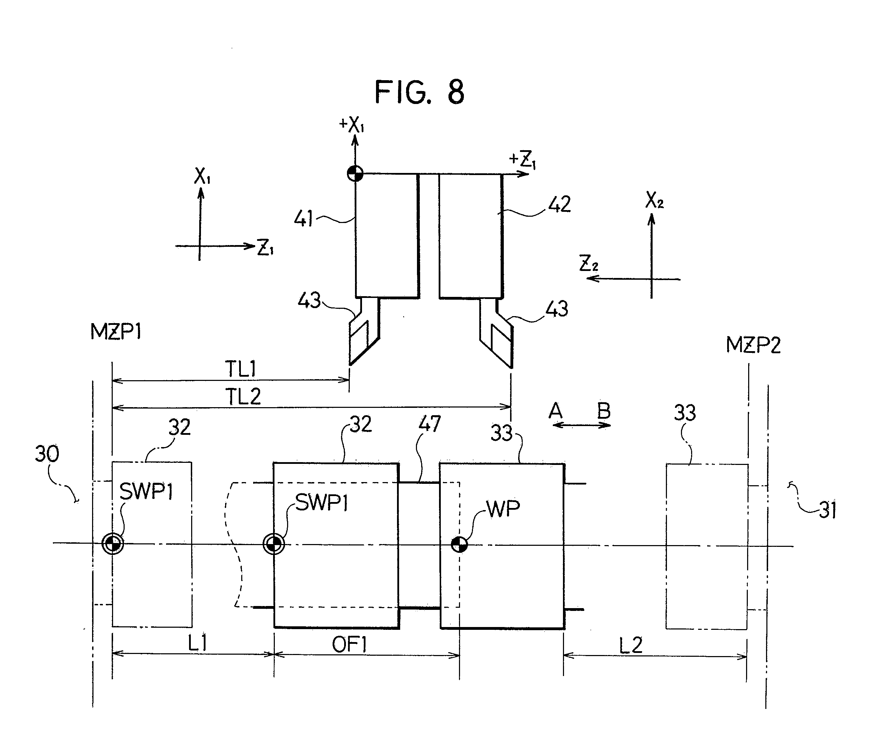

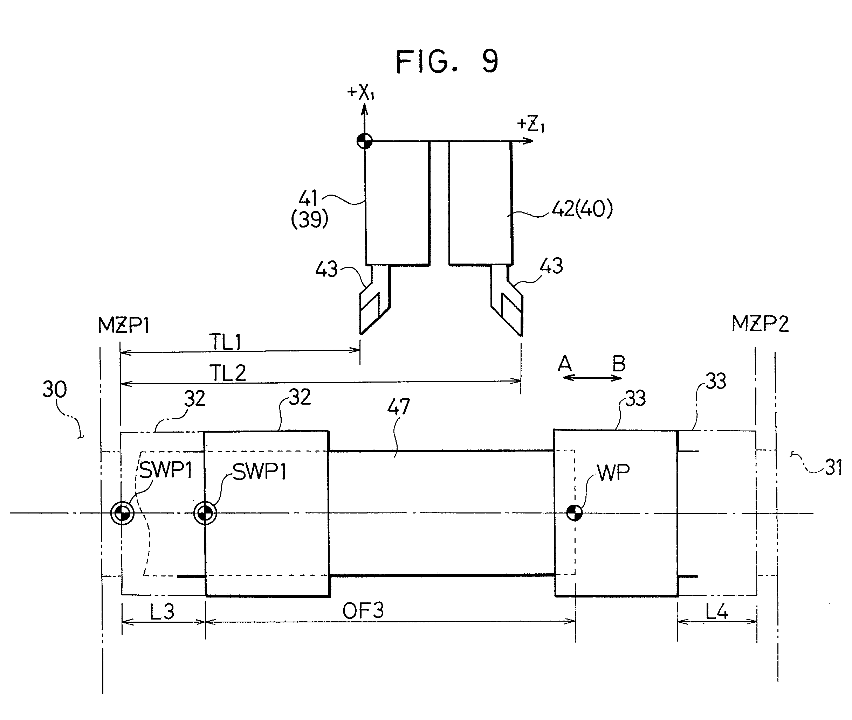

And, in case where the workpiece 47 is what is called a bar shaped workpiece for which machining is performed while a long workpiece 47 is intermittently pulled out the workpiece spindle 32 side through the workpiece spindle 33 in the direction as shown by the arrow B in Fig.8, an operator needs the movement distance L3 of the spindle stock 30 from the mechanical origin MZP1 and the movement distance L4 of the spindle stock 31 from the mechanical origin MZP2 when the workpiece 47 is pulled out the workpiece spindle 32 in the direction as shown by the arrow B as shown in Fig.9 as well as the first Z-offset value OF1, the first movement distance L1 and the second movement distance L2 same as described before as shown in Fig.8 as the delivery data WTD in order to execute the machining delivery execution program WTP.

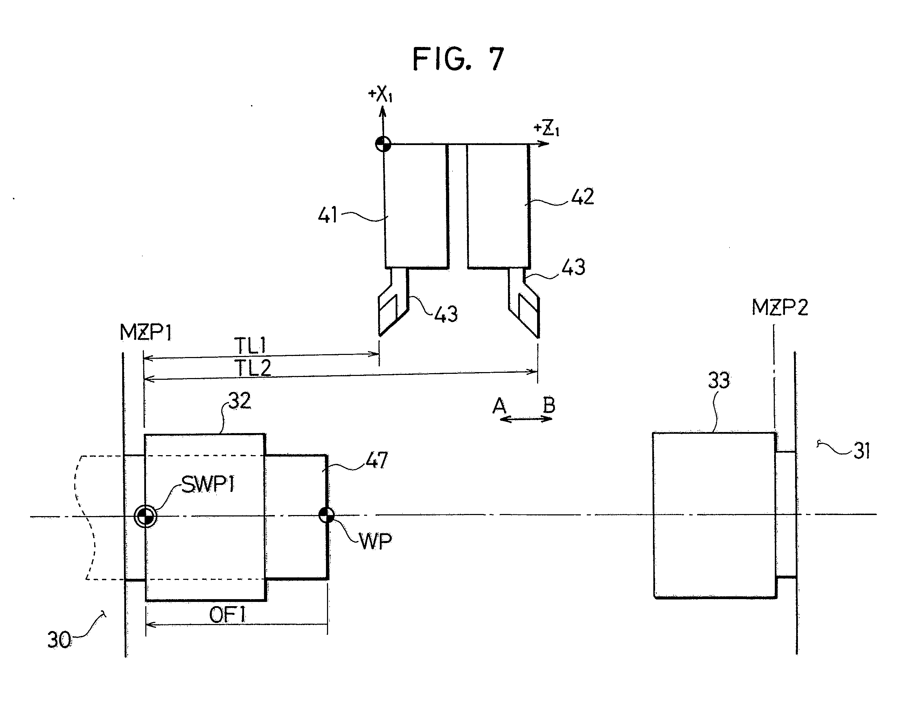

In this way, after an operator inputs the above-described delivery data WTD through the input portion 6, the machining delivery execution program WTP is started and proceeds to the step S24 via the step S1. At the step S24, the workpiece 47 is supplied in such a state that its top edge protrudes from the workpiece spindle 32 with a predetermined distance through the workpiece spindle 32 in the direction as shown by the arrow B as shown in Fig.7. That is to say, the top edge of the workpiece 47 protrudes from the standard workpiece origin SWP1 with the length corresponding to the first offset value OF1 in the direction as shown by the arrow B. After the workpiece spindle 32 is supplied with the workpiece 47 as shown in Fig.7, the program proceeds to the step S25 and a new machining coordinate system is set in $Z_1$-axis direction on the assumption that the standard workpiece origin SWP1 of the spindle stock 30 is origin.

In this way, after the machining coordinate system is newly set on a basis of the standard workpiece origin SWP1, the program proceeds to the step S26 and the first routine of machining is performed toward the workpiece 47 held by the workpiece spindle 32. When the first routine of machining ends, the program proceeds to the step S27 and the operation is perfomed in order to deliver the workpiece 47 from the spindle stock 30 to the spindle stock 31 side. This operation is performed by fitting and engaging the right edge portion in Fig.8 of the workpiece 47 with the workpiece spindle 33 of the spindle stock 31 in such a manner that the spindle stock 30 is moved with the first movement distance L1 in the direction as shown by the arrow B through the coordinate system computing portion 12, the first spindle control portion 22 and the like and the spindle stock 31 is moved with the second movement distance L2 in the direction as shown by the arrow A through the coordinate system computing portion 12, the second spindle control portion 23 and the like as shown in Fig.8.

In this way, when the workpiece 47 is held by the workpiece spindles 32 and 33, the program proceeds to the step S28 and the second Z-offset value OF2 of the workpiece origin WP for the spindle stock 33 as shown in Fig.8 is obtained. The second Z-offset value OF2 can be obtained by the following expression.

$$OF2 = L1 + OF1 + L2 \quad (4)$$

In case where machining is performed toward the workpiece 47 in the state as shown in Fig.8, a new machining coordinate system in $Z_2$ direction is set at the position which is the second Z-offset value OF2 apart from the mechanical origin MZP1 as shown in Fig.8 in the right direction in the figure and machining is performed on a basis of the coordinate system. In this case, the distance between the origin of the machining coordinate system set at the position which is the second Z-offset value OF2 apart from the mechanical origin MZP1 and the workpiece origin WP becomes L2 and the value makes fixed. Accordingly, machining on the spindle stock 31 side can be exactly and smoothly executed on a basis of the coordinate system set newly.

In this way, after a predetermined machining is performed, the program proceeds to the step S29, the bar shaped workpiece is pulled out the workpiece spindle 32 with a predetermined length in the direction as shown by the arrow B in such a manner that the spindle stock 30 is moved in the direction as shown by the arrow A so that the distance between the mechanical origin MZP1 and the standard workpiece origin SWP1 may be the third movement distance L3 and the spindle stock 31 is moved in the direction as shown by the arrow B so that the distance between the mechanical origin MZP2 and the spindle stock 31 may be the fourth movement distance L4. In this way, when the workpiece 47 is pulled out the workpiece spindle 32, the program proceeds to the step S30. The left edge portion in Fig.9 of the workpiece 47 is detected by a known terminal detecting means (not shown) provided in the workpiece spindle 32 as a result of pulling of the workpiece 47 and it is judged that whether machining toward the workpiece 47 can be performed no more or not.

In case where the judgement is that the terminal portion of the workpiece is detected and there is no workpiece 47 to be pulled at the step S30, the program proceeds to the step S31. For the spindle stock 30, the program proceeds to the step S32 and it is judged that whether there is the workpiece 47 to be machined next or not. In case where there is the workpiece 47 to be machined, the program returns to the step S24 and the same machining as described before is performed by supplying the spindle stock 30 with a new workpiece 47 again. In case where there is no workpiece 47 to be machined next at the step S32, the program proceeds to the step S33 and the machining movement of the workpiece 47 is finished.

The program proceeds to the step S34 from the step S31 for the spindle stock 31, the second routine of machining is performed toward the workpiece 47 delivered to the spindle stock 31 side on a basis of the machining program PRO and the workpiece 47 after the second routine of machining is detached from the workpiece spindle 33 at the step S35. When the workpiece 47 is detached, the program proceeds to the step S36 and it is judged that whether there is the workpiece 47 to be machined on the spindle stock 31 side or not. In case where there is no workpiece 47 to be machined, the program proceeds to the step S37 and the machining movement of the workpiece 47 by the spindle stock 31 is finished. And, in case where there is the workpiece 47 to be machined on the spindle stock 31 side, the program returns to the step S27 and the workpiece 47 to which the first routine finishes is delivered from the spindle stock 30 side to the spindle stock 31 side. Thereafter, a predetermined machining is performed toward the workpiece 47.

In case where the judgement is that there is the workpiece 47 to be pulled at the step S30, the program proceeds to the step S38 and it is judged that whether it's time to perform cutting-off movement toward the workpiece 47 pulled at the step S29 or not by analyzing the machining program PRO at the program interpretation computing portion 16. In case where a predetermined machining is finished and the machining program PRO directs to perform cutting-off machining toward the workpiece 47, the program proceeds to the step S40 for the spindle stock 30 through the step S39 after cutting-off machining and it is judged whether there is the workpiece 47 to be machined next in the spindle stock 30 or not. In case where there is no workpiece 47 to be machined, the program proceeds to the step S41 and machining by the spindle stock 30 is finished. And, in case where there is the workpiece 47 to be machined next in the spindle stock 30, the program returns to the step S25 and the first routine of machining is started toward the workpiece 47 held by the workpiece spindle 32 again.

For the spindle stock 31, the program proceeds to the step S42 and a predetermined second routine of machining is executed toward the workpiece 47 after the cutting-off machining by means of the tool rest 40. When the machining finishes, the program proceeds to the step S43 and the workpiece 47 to which the second routine of machining finishes is detached from the workpiece spindle 33. Thereafter, it is judged that whether there is the workpiece 47 to be machined on the spindle stock 31 side or not at the step S44. In case where there is no workpiece 47 to be machined, the program proceeds to the step S45 and the machining movement of the workpiece 47 by the spindle stock 31 is finished. And, in case where there is the workpiece 47 to be machined on the spindle stock 31 side, the program returns to the step S27 and the workpiece 47 to which the first routine finishes is delivered from the spindle stock 30 side to the spindle stock 31 side. Thereafter, a predetermined machining is performed toward the workpiece 47.

In case where the machining program PRO doesn't direct to perform cutting-off machining toward the workpiece 47 at the step S38, the program proceeds to the step S46 and the third Z-offset value OF3 of the workpiece origin WP for the standard workpiece origin SWP1 on the spindle stock 30 side is obtained. That is, the third Z-offset value OF3 can be obtained by the expression (5).

$$OF3 = L1 - L3 + L2 - L4 + OF1 \quad (5)$$

In this way, after the third Z-offset value OF3 is obtained, a new machining coordinate system is set in $X_1$-$Z_1$ direction toward the standard workpiece origin SWP1 of the spindle stock 30 and the third routine of machining is performed toward the workpiece 47 portion newly pulled out the workpiece spindle 32 at the step S47 on a basis of the machining program PRO.

In this way, after the third routine of machining is performed toward the workpiece 47, the program proceeds to the step S48, the movement to be executed at the steps 27, 29 is performed toward the spindle stocks 30, 31 again, the raw portion of the workpiece 47 which had been hiding in the workpiece spindle 32 is pulled with a predetermined quantity in the direction as shown by the arrow B as shown in Fig.9, the fourth offset position is computed in order to obtain the position of the workpiece origin WZ toward the standard workpiece origin SWP1 in the same way as the case of the step S46 at the step S49 and a new machining coordinate system is set at the standard workpiece origin SWP1 of the spindle stock 30.

Thereafter, cutting-off machining is performed toward the workpiece 47 at the predetermined position indicated on the machining program PRO at the step S50. For the spindle stock 30, the program proceeds to the step S52 from the step S51 and it is judged that whether there is the workpiece 47 to be machined next in the spindle stock 30 or not. In case where there is no workpiece 47 to be machined, the program proceeds to the step S53 and the machining movement of the workpiece 47 by the spindle stock 30 is finished. In case where there is the workpiece 47 to be machined in the spindle stock 30 at the step S52, the program proceeds to the step S24 and a new workpiece 47 is supplied to continue machining. On the other hand, the program proceeds to the step S54 for the spindle stock 31 and the fourth routine of machining is performed toward the workpiece 47 of the spindle stock 31 side on a basis of the machining program PRO. When the machining finishes, the program proceeds to the step S55 and the workpiece 47 to which the first routine through the fourth routine of machining finishes is detached from the spindle stock 31. And, the main control portion 2 judges that whether there is the workpiece 47 to be machined next in the spindle stock 31 or not at the step S56. In case where there is no workpiece 47 to be machined, the program proceeds to the step S57 and the machining movement of the workpiece 47 by the spindle stock 31 is finished. In case where there is the workpiece 47 to be machined in the spindle stock 31 at the step S56, the program returns to the step S27, the workpiece 47 to be machined newly to which the first routine finishes is delivered from the spindle stock 30 side. Then, machining from now on is continued.

The present invention is explained according to the embodiments hereinbefore. But, the embodiments described in the present specification are not restricted but exemplified ones. And, the range of the invention is designated in the attached claims and not bound by the description of the embodiments. Accordingly, all of deformation and change belonging to the claims are in the range of the present invention.

## Claims

1. A setting control method of machining coordinate system in a machine tool having the first and second spindle stocks being relatively movable in the first direction in the shape of facing to each other and workpiece spindles provided rotatably through which a workpiece can be held by those spindle stocks, comprising:

composing machining program on a basis of a workpiece origin corresponding to a workpiece;

setting a standard origin which moves together with one spindle stock at least between two spindle stocks moving in said first direction for the spindle;

setting the distance between said standard origin and said workpiece origin as the first offset value;

performing machining toward said workpiece in the first spindle stock by setting the first machining coordinate system for said first spindle stock on a basis of said first offset value; and

performing machining in the second spindle stock by setting the second machining coordinate system for the second spindle stock on a basis of said first offset value and the movement quantity toward a workpiece mechanical origin.

2. A setting control method of machining coordinate system in a machine tool having the first and second spindle stocks being relatively movable in the first direction in the shape of facing to each other and workpiece spindles provided rotatably through which a workpiece can be held by those spindle stocks, comprising:

composing machining program on a basis of a workpiece origin corresponding to a workpiece;

setting the first standard origin which moves together with the first spindle stock moving in said first direction at said first spindle stock;

setting the second standard origin which moves together with the second spindle stock moving in said first direction at said second spindle stock;

setting the distance between said workpiece origin of said workpiece installed in said first spindle stock and said first standard origin as the first offset value;

setting the distance between said workpiece origin of said workpiece installed in said second spindle stock and said second standard origin as the second offset value;

performing machining toward said workpiece installed in said first spindle stock by setting the first machining coordinate system for said first spindle stock on a basis of said first offset value;

setting the second machining coordinate system for the second spindle stock on a basis of said second offset value; and

performing machining in the second spindle stock on a basis of machining program according to the set second machining coordinate system.

3. A setting control method of machining coordinate system in a machine tool having the first and second spindle stocks being relatively movable in the first direction in the shape of facing to each other and workpiece spindles provided rotatably through which a workpiece can be held by those spindle stocks, comprising:

composing machining program on a basis of a workpiece origin corresponding to a workpiece;

setting a standard origin which moves together with one spindle stock at least between two spindle stocks moving in the first direction for the spindle;

setting the distance between said standard origin and said workpiece origin as the first offset value;

performing machining toward said workpiece installed in the first spindle stock by setting the first machining coordinate system for said first spindle stock on a basis of said first offset value;

making said first and second spindle stocks close to each other by moving the first movement quantity and the second movement quantity when the machining in the first spindle stock finishes and delivering a workpiece between both spindle stocks;

obtaining the second offset value on a basis of said first offset value and said first and second movement quantity;

setting the second machining coordinate system for the second spindle stock on a basis of the second offset value; and

performing machining in the second spindle stock on a basis of machinining program according to the set second machining coordinate system.

4. A setting control method of machining coordinate system in a machine tool having the first and second spindle stocks being relatively movable in the first direction in the shape of facing to each other and workpiece spindles provided rotatably through which a workpiece can be held by those spindle stocks, comprising:

composing machining program on a basis of a workpiece origin corresponding to a workpiece;

setting the first standard origin which moves together with the first spindle stock moving in said first direction at said first spindle stock;

setting the second standard origin which moves together with the second spindle stock moving in said first direction at said second spindle stock;

setting the distance between said workpiece origin of said workpiece installed in said first spindle stock and said first standard origin as the first offset value;

setting the distance between said workpiece origin of said workpiece installed in said second spindle stock and said second standard origin as the second offset value;

performing machining toward said workpiece installed in said first spindle stock by setting the first machining coordinate system for said first spindle stock on a basis of said first offset value;

making said first and second spindle stocks close to each other by moving relatively when the machining in the first spindle stock finishes and delivering a workpiece between both spindle stocks;

setting the second machining coordinate system for the second spindle stock on a basis of said second offset value; and

performing machining in the second spindle stock on a basis of machining program according to the set coordinate system.

5. A setting control method of machining coordinate system in a machine tool having the first and second spindle stocks being relatively movable in the first direction in the shape of facing to each other and workpiece spindles provided rotatably through which a workpiece can be held by those spindle stocks, comprising:

composing machining program on a basis of a workpiece origin corresponding to a workpiece;

setting a standard origin which moves together with one spindle stock at least between two spindle stocks moving in the first direction for the spindle;

setting the distance between said standard origin and said workpiece origin as the first offset value;

holding said workpiece to be machined between the first spindle stock and the second spindle stock by moving said first and second spindle stocks with the first and second movement quantity;

setting the first machining coordinate system for said first spindle stock on a basis of said first offset value and the first movement quantity and setting the second machining coordinate system for said second spindle stock on a basis of said first offset value and the first and second movement quantity; and

performing machining on a basis of machining program according to those set first and second machining coordinate systems.

6. A setting control method of machining coordinate system in a machine tool having the first and second spindle stocks being relatively movable in the first direction in the shape of facing to each other and workpiece spindles provided rotatably through which a workpiece can be held by those spindle stocks, comprising:

composing machining program on a basis of a workpiece origin corresponding to a workpiece;

setting the first standard origin which moves together with the first spindle stock moving in said first direction at said first spindle stock;

setting the second standard origin which moves together with the second spindle stock moving in said first direction at said second spindle stock;

setting the distance between said workpiece origin of said workpiece installed in said first spindle stock and said first standard origin as the first offset value;

setting the distance between said workpiece origin of said workpiece installed in said second spindle stock and said second standard origin as the second offset value;

holding said workpiece to be machined between the first and second spindle stocks by moving said first and second spindle stocks with the first and second movement quantity;

setting the first machining coordinate system for said first spindle stock on a basis of said first offset value and the first movement quantity and setting the second machining coordinate system for said second spindle stock on a basis of said second offset value and the second movement quantity; and

performing machining on a basis of machining program according to those set first and second machining coordinate systems.

7. A setting control method of machining coordinate system in a machine tool having the first and second spindle stocks being relatively movable in the first direction in the shape of facing to each other and workpiece spindles provided rotatably through which a workpiece can be held by those spindle stocks, comprising:

composing machining program on a basis of a workpiece origin corresponding to a workpiece;

setting a standard origin which moves together with one spindle stock at least between two spindle stocks moving in the first direction for the spindle;

setting the distance between said standard origin and a workpiece origin as the first offset value;

protruding said workpiece from the first spindle stock with the quantity corresponding to the first offset value;

performing machining toward said workpiece in the first spindle stock by setting the first machining coordinate system for said first spindle stock on a basis of said first offset value in this state;

moving said first and second spindle stocks with the first and second movement quantity when the machining finishes and holding the top edge of said workpiece held by said first spindle stock by the second spindle stock;

moving said first and second spindle stocks with the third and fourth movement quantity in this state and pulling said workpiece out the first spindle stock with a predetermined quantity;

obtaining the position of the workpiece origin toward said standard origin in this state as the third offset value;

setting machining coordinate system for the first spindle stock at least on a basis of the third offset value; and

performing machining toward the workpiece pulled on a basis of the set machining coordinate system.

# FIG. 1 (a)

$\frac{1}{5}$

```
        5                    MAIN                          2              6
                            CONTROL PORTION

  7        DISPLAY PORTION          WTD      INPUT PORTION

      CUTTING EDGE POSITION        PRO      MACHINING                    9
      COORDINATE MEMORY                     PROGRAM MEMORY

         MOVEMENT DISTANCE                  Z-AXIS                       11
         MEMORY                             OFFSET MEMORY
  10

         COORDINATE SYSTEM                                  3
         COMPUTING PORTION

  12       SYSTEM PROGRAM                   PROGRAM INTERPRETA-          16
           MEMORY                           TION COMPUTING
                                            PORTION
         15

                                            SYNCHRONOUS PROCESS
                                            COMPUTING PORTION
                                            BETWEEN SYSTEMS

          22                                PARAMETER       49          19
                                            MEMORY                      23

        THE FIRST SPINDLE                   THE SECOND SPINDLE
        CONTROL PORTION                     CONTROL PORTION

        THE FIRST TOOL                      THE SECOND TOOL
        REST CONTROL                        REST CONTROL
        PORTION                             PORTION

                        25                              26

        Ⓐ   Ⓑ                                      Ⓒ   Ⓓ
```

# FIG. 1 (b)

EP 0 335 659 A2

EP 0 335 659 A2

## FIG. 2 (a)

START WTP

SHAFT SHAPED WORKPIECE / S1 WORKPIECE KIND / CHUCK WORKPIECE S2

S13 — WORKPIECE LOADING

S14 — SET THE COORDINATE SYSTEM OF THE HEAD 1 SIDE IN CONSIDERATION OF MOVEMENT DISTANCE

INTERLOCK THE HEAD 2 AND SET THE COORDINATE SYSTEM BY OPERATION

S15 — PROGRAM MACHINING BY WORKPIECE INTERLOCKING

S19

BAR SHAPED WORKPIECE

WORKPIECE LOADING — S24

S25 — SETTING OF THE COORDINATE SYSTEM OF THE HEAD 1 SIDE

S26 — THE FIRST ROUTINE PROGRAM MACHINING

INTERLOCKING MOVEMENT FOR WORKPIECE DELIVERY

S27 — COMPUTE THE COORDINATE SYSTEM OF THE HEAD 2 SIDE BY A PREDETERMINED CALCULATING EXPRESSION AND SET IT

S28

EXIST

NEXT MACHINING TOWARD WORKPIECE

NOT EXIST

HEAD1 END

S10

S9

WORKPIECE LOADING

SETTING OF THE COORDINATE SYSTEM OF THE HEAD 1 SIDE

S3

S4 — THE FIRST ROUTINE PROGRAM MACHINING IN THE ABOVEMENTIONED COORDINATE SYSTEM

WORKPIECE DELIVERY BY COOPERATING MOVEMENT

S5

B C D E F G H I J

# FIG. 2 (b)

Ⓑ  Ⓒ  Ⓓ Ⓔ  Ⓕ  Ⓖ Ⓗ  Ⓘ  Ⓙ

RELEASE OF INTERLOCKING

WORKPIECE UNLOADING

S20 EXIST

NEXT MACHINING TOWARD WORKPIECE — S32

HEAD 1 END

S21

S33

NEXT MACHINING TOWARD WORKPIECE

S22

NOT EXIST

S23

END

HEAD — 1 — S31
2

THE SECOND ROUTINE PROGRAM MACHINING — S34

WORKPIECE UNLOADING

S35

Ⓓ'  Ⓔ'

BAR-SHAPED MATERIAL DRAWING INTERLOCK MOVEMENT

S29

BAR-SHAPED MATERIAL FINISH

FINISH  NO S30

CUTTING-OFF MACHINING — S38

NOT EXIST

COMPUTE THE COORDINATE SYSTEM OF THE HEAD 1 SIDE BY A PREDETERMINED CALCULATING EXPRESSION

S46

Ⓕ'  Ⓖ

COMPUTE THE COORDINATE SYSTEM OF THE HEAD 2 SIDE BY A PREDETERMINED CALCULATING EXPRESSION AND SET IT (DETERMINATION OF Z-OFFSET(2))

S6

EXIST  S40

NEXT MACHINING TOWARD WORKPIECE  NOT EXIST

EXIST

HEAD — 1 — S41
2 — S39

HEAD 1 END

S7

THE SECOND ROUTINE PROGRAM MACHINING IN THE ABOVEMENTIONED COORDINATE SYSTEM

WORKPIECE UNLOADING

S8

Ⓗ'  Ⓘ'  Ⓙ'

# FIG. 2 (c)

Ⓓ' Ⓔ Ⓕ' Ⓖ Ⓗ' Ⓘ' Ⓙ

NEXT MACHINING TOWARD WORKPIECE
EXIST
S36
NOT EXIST
HEAD 2 END — S37

THE THIRD ROUTINE PROGRAM MACHINING BY WORKPIECE INTERLOCKING
S47

THE SECOND ROUTINE PROGRAM MACHINING
S42

WORKPIECE UNLOADING
S43

EXIST

NEXT MACHINING TOWARD WORKPIECE
S44

NEXT MACHINING TOWARD WORKPIECE
EXIST
S11
NOT EXIST
HEAD 2 END
S12

NOT EXIST
S45
HEAD 2 END

Ⓐ

# FIG. 3

(A)

INTERLOCKING MOVEMENT FOR WORKPIECE DELIVERY — S48

COMPUTE THE COORDINATE SYSTEM OF THE HEAD 1 SIDE BY A PREDETERMINED CALCULATING EXPRESSION AND SET IT — S49

CUTTING-OFF MACHINING — S50

S51

HEAD

HEAD1

HEAD 2

TO STEP S24

S54

THE FOURTH ROUTINE PROGRAM MACHINING IN THE ABOVE-MENTIONED COORDINATE SYSTEM

TO STEP S27

S52

EXIST

NEXT MACHINING TOWARD WORKPIECE

NOT EXIST

S56

NEXT MACHINING TOWARD WORKPIECE

NOT EXIST

WORKPIECE UNLOADING

S55

HEAD 1 END — S53

HEAD 2 END

S57

FIG. 4

# FIG. 5

EP 0 335 659 A2

# FIG. 6

EP 0 335 659 A2

FIG. 7

# FIG. 8

MZP1

MZP2

EP 0 335 659 A2

# FIG. 9

EP 0 335 659 A2

# FIG. 10

EP 0 335 659 A2

FIG. 11

EP 0 335 659 A2

FIG. 12